# FASCICULE DE BREVET EUROPEEN

(11) **EP 3 545 448 B1**
(45) Date de publication et mention de la délivrance du brevet: **07.01.2026**
(21) Numéro de dépôt: 17804182.8
(22) Date de dépôt: 24.11.2017
(51) Int. Cl.: G06F 21/16, G06F 21/62

(54) **PROCÉDÉ D'INSERTION DE DONNÉES À LA VOLÉE DANS UNE BASE DE DONNÉES TATOUÉES ET DISPOSITIF ASSOCIÉ**
VERFAHREN ZUM EINGEBEN VON DATEN WÄHREND DES FLUGS IN EINE MIT EINEM WASSERZEICHEN VERSEHENE DATENBANK UND ZUGEHÖRIGE VORRICHTUNG
METHOD FOR INSERTING IN-FLIGHT DATA INTO A WATERMARKED DATABASE AND ASSOCIATED DEVICE

(30) Priorité: 25.11.2016 FR 1661526
(43) Date de publication de la demande: 02.10.2019
(73) Titulaire: WATOO, 29280 Plouzané (FR)
(72) Inventeur: COATRIEUX, Gouenou, 29290 Saint-Renan (FR); FRANCO CONTRERAS, Javier, 94270 Le Kremlin Bicêtre (FR)
(74) Mandataire: Gevers & Orès
(86) Numéro de dépôt international: PCT/EP2017/080426
(87) Numéro de publication internationale: WO 2018/096125

(56) Documents cités:
- US-A1- 2014 157 439
- US-A1- 2014 157 439
- ATALLAH M ET AL: "Rights Protection for Relational Data", IEEE TRANSACTIONS ON KNOWLEDGE AND DATA ENGINEERING, IEEE SERVICE CENTER, LOS ALAMITOS, CA, US, vol. 16, no. 12, 1 December 2004 (2004-12-01), pages 1509 - 1525, XP011121237, ISSN: 1041-4347, DOI: 10.1109/TKDE.2004.94
- FRANCO-CONTRERAS JAVIER ET AL: "Robust Lossless Watermarking of Relational Databases Based on Circular Histogram Modulation", IEEE TRANSACTIONS ON INFORMATION FORENSICS AND SECURITY, IEEE, PISCATAWAY, NJ, US, vol. 9, no. 3, 1 March 2014 (2014-03-01), pages 397 - 410, XP011538291, ISSN: 1556-6013, [retrieved on 20140128], DOI: 10.1109/TIFS.2013.2294240
- THEODOROS TZOURAMANIS: "A robust watermarking scheme for relational databases", INTERNET TECHNOLOGY AND SECURED TRANSACTIONS (ICITST), 2011 INTERNATIONAL CONFERENCE FOR, IEEE, 11 December 2011 (2011-12-11), pages 783 - 790, XP032113157, ISBN: 978-1-4577-0884-8
- ATALLAH M ET AL: "Rights Protection for Relational Data", IEEE TRANSACTIONS ON KNOWLEDGE AND DATA ENGINEERING, IEEE SERVICE CENTER, LOS ALAMITOS, CA, US, vol. 16, no. 12, 1 December 2004 (2004-12-01), pages 1509 - 1525, XP011121237, ISSN: 1041-4347, DOI: 10.1109/TKDE.2004.94
- FRANCO-CONTRERAS JAVIER ET AL: "Robust Lossless Watermarking of Relational Databases Based on Circular Histogram Modulation", IEEE TRANSACTIONS ON INFORMATION FORENSICS AND SECURITY, IEEE, PISCATAWAY, NJ, US, vol. 9, no. 3, 1 March 2014 (2014-03-01), pages 397 - 410, XP011538291, ISSN: 1556-6013, [retrieved on 20140128], DOI: 10.1109/TIFS.2013.2294240
- THEODOROS TZOURAMANIS: "A robust watermarking scheme for relational databases", INTERNET TECHNOLOGY AND SECURED TRANSACTIONS (ICITST), 2011 INTERNATIONAL CONFERENCE FOR, IEEE, 11 December 2011 (2011-12-11), pages 783 - 790, XP032113157, ISBN: 978-1-4577-0884-8

## Description

### 1. Domaine de l'invention

Le domaine de l'invention est celui de la sécurité informatique et plus particulièrement de la protection des bases de données.

### 2. Art antérieur

Par la suite, on parlera de base de données en tant que forme particulière de structuration d'un ou plusieurs jeux de données. Le reste de la description s'appliquera indifféremment à tout type de bases de données susceptibles d'être tatouées et en particulier à des bases de données relationnelles.

Il est connu de tatouer le contenu des bases de données afin d'assurer la traçabilité des données extraites et de certifier l'authenticité de l'utilisateur ayant extrait ces données.

Par définition, le tatouage de données fait référence à une technique consistant à insérer dans les données à protéger une marque (*watermark* en anglais). La marque est un message contenant des attributs de sécurité, tels qu'une signature ou un code d'authentification, permettant au propriétaire d'une base de données de tracer les utilisateurs qui accèdent à ces données, ou de vérifier l'intégrité de ces dernières. Le tatouage laisse l'utilisateur accéder à l'information tout en la maintenant protégée par la marque insérée. Les données dans lesquelles la marque a été insérée sont dites tatouées.

La propriété de réversibilité est une caractéristique propre à certaines modulations de tatouage offrant la possibilité d'enlever la marque des données tatouées et de récupérer les données originales, *i.e.* avant l'application du tatouage.

Des méthodes de tatouage robuste et réversible de données ont été présentées par J. Franco-Contreras, G. Coatrieux, F. Cuppens, N. Cuppens-Boulahia, E. Chazard et C. Roux dans « Tatouage Robuste et Réversible pour la Traçabilité de Bases de Données Relationnelles en Santé », au congrès Recherche en Imagerie et Technologies pour la Santé (RITS) en Avril 2013 à Bordeaux en France.

De manière classique, l'insertion de données dans une base de données nécessite de détatouer l'intégralité de la base. Compte-tenu des capacités de traitement limitées des systèmes de gestion de bases de données actuels (e.g. processeurs et mémoires), ce traitement est particulièrement contraignant pour l'insertion de données.

Un problème auquel est confronté l'homme du métier lors de la mise à jour d'une base de données tatouées est que l'insertion de nouveaux tuples ou enregistrement de données dans la base de données ne peut pas se faire « à la volée », c'est-à-dire qu'il n'est pas possible d'insérer de nouveaux tuples, sans avoir à détatouer préalablement l'intégralité ou une partie de la base. Dès lors que les nouvelles données ont été insérées, l'intégralité ou une partie des données contenues dans la base sont tatouées en tenant compte des nouvelles données insérées.

Ces opérations de détatouage/tatouage sont particulièrement désavantageuses car elles nécessitent des temps de traitement non négligeables alors que la taille des données à insérer est en général relativement faible (quelques kilo-octets) en comparaison avec la capacité de données contenues dans la base (plusieurs Téraoctets). Par ailleurs, le détatouage intégral de la base de données, même s'il est temporaire, doit être évité pour des raisons de sécurité.

Par conséquent, il existe un réel besoin d'insérer, en un minimum de temps et de manière sécurisée, des données contenues dans une base de données tatouées selon un mécanisme de tatouage en particulier réversible, sans avoir à effectuer de traitement sur l'intégralité de la base de données.

Il est connu dans le document Rights Protection for Relational Data, de Radu Sion, Mikhail Atallah et Sunil Prabhakar, publié dans IEEE Transactions on Knowledge and Data Engineering, Vol. 16, No. 12, en décember 2014, un procédé de tatouage appliqué dans un contexte particulier, selon lequel différentes versions tatouées d'une même base de données originales sont distribuées à des clients ou des collaborateurs. Dans ce contexte dit d'*outsourcing,* le propriétaire de la base de données doit toujours avoir accès aux données originales (*i.e.* copie de la base non tatouée sur son serveur en interne) et aux différents serveurs où les bases de données tatouées sont stockées par les clients.

Ainsi, la mise en œuvre du procédé selon Sion et al. requiert que le propriétaire des bases de données ait accès en permanence à l'intégralité des données originales ainsi qu'aux données tatouées externalisées.

Comme indiqué dans Sion et al., afin de pouvoir garantir que les mises-à-jour de la base de données ne perturbent pas la marque insérée, il est nécessaire de ré-accéder aux données originales ainsi qu'aux données tatouées.

Plus précisément, dans le cas de l'insertion d'un nouvel enregistrement ou tuple tᵤ, le propriétaire de la base de données doit *(i)* déterminer le groupe d'appartenance de ce tuple (i.e. identifier le groupe dans lequel le tuple est destiné à être inséré) et *(ii)* récupérer les données tatouées de ce groupe pour déterminer si l'ajout de ce nouveau tuple, une fois tatoué, ne perturbe/modifie pas la valeur des bits de tatouage dans le groupe de tuples concerné.

Si l'insertion du nouveau tuple modifie la valeur des bits de tatouage du groupe dans lequel le tuple est destiné à être inséré, le propriétaire doit remplacer les données tatouées précédemment transmises au client par une nouvelle version tatouée obtenue à partir des données originales auxquelles le nouveau tuple a été ajouté.

Un tel procédé est contraignant dans la mesure où il nécessite de stocker les données originales et tatouées. Dans le contexte du Big Data, ces données peuvent représenter des quantités d'informations très volumineuses. Par ailleurs, le procédé selon Sion et al. est désavantageux car les opérations décrites ci-dessus doivent être réalisées pour chaque client, étant donné que chaque copie de la base de données originales est tatouée différemment en fonction du client considéré.

Ainsi, le procédé décrit selon Sion et al. n'est pas considéré comme un procédé de tatouage à la volée, dans le sens où il nécessite d'accéder à tout ou partie des données originales et/ou à une partie des données tatouées.

L'état de la technique comporte en outre l'article « A robust watermarking scheme for relational databases » de Theodoros Tzouramanis, 2011 IEEE, qui décrit un procédé de tatouage dans lequel des tuples sont sélectionnés à partir d'une fonction de hachage d'une clé privée et d'une clé primaire, puis dans lequel chaque tuple sélectionné est modifié pour stocker un bit d'un tatouage.

### 3. Objet et résumé de l'invention

La présente invention offre une solution qui répond au problème technique mentionné ci-dessus en proposant un procédé d'insertion d'au moins un tuple dans une base de données préalablement tatouée selon la revendication 1.

Le stockage préalable des métadonnées de tatouage permet avantageusement de tatouer à la volée les nouveaux tuples à insérer dans la base de données, sans avoir à détatouer l'intégralité de la base de données à chaque insertion de tuples.

En effet, les métadonnées de tatouage définissent la manière de modifier la valeur des attributs dans les tuples à tatouer, en fonction de leur appartenance à un groupe donné.

Grâce à ces données préalablement stockées, l'insertion de nouveaux tuples peut être réalisée à la volée, en un temps réduit par rapport au cas classique où un traitement sur l'intégralité de la base est nécessaire pour connaître la façon de modifier les tuples lors de leur insertion dans la base.

Ainsi, la présente invention est particulièrement avantageuse par rapport au procédé selon Sion et al., dans la mesure où il n'est pas nécessaire de récupérer tout ou partie des données tatouées précédemment transmises aux clients ni d'avoir accès aux données originales, précisément car les métadonnées de tatouage préalablement enregistrées lors de l'étape de stockage permettent d'identifier directement les modifications qui doivent être effectuées sur le nouveau tuple à ajouter ou sur les valeurs de ses attributs.

Après avoir identifié le groupe d'appartenance du nouveau tuple, le procédé selon l'invention consulte les métadonnées de tatouage préalablement stockées pour identifier la règle de codage à appliquer sur le tuple en fonction du type de groupe (e.g. groupe codant un bit '0' ou un bit '1' ou, pour certaines modulations de tatouage, s'il s'agit d'un groupe porteur ou groupe non-porteur) et de la force d'insertion afin de réaliser la modification adéquate.

Ainsi, grâce au procédé selon l'invention, les mises-à-jour s'effectuent à la volée, c'est-à-dire directement sur les données ajoutées sans requérir un accès aux données originales ou aux données tatouées déjà transmises aux clients.

Selon une autre caractéristique de l'invention, l'accès aux métadonnées de tatouage et l'accès à la base de données sont respectivement protégés par des données d'authentification et/ou d'identification distinctes.

Selon une autre caractéristique de l'invention, les droits de lecture et d'écriture associés aux métadonnées de tatouage ne sont pas accordés à un utilisateur de la base de données.

Dans un mode particulier de réalisation, des étapes du procédé précité sont déterminées par des instructions de programmes d'ordinateurs.

En conséquence, l'invention vise aussi un programme d'ordinateur sur un support d'informations. Ce programme susceptible d'être mis en œuvre par un microprocesseur comprend des instructions adaptées à la mise en œuvre des étapes du procédé selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions de code d'un programme d'ordinateur tel que mentionné ci-dessus. Ce support d'informations est un moyen de stockage d'informations, amovible ou non, partiellement ou totalement lisible par un ordinateur ou un microprocesseur.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un serveur adapté pour exécuter les instructions pour la mise en œuvre des étapes du procédé selon l'invention, les instructions pouvant être stockées sur un support d'informations inclus dans le serveur ou accessible par ce dernier.

Le support d'informations, le programme d'ordinateur et le serveur précités présentent des caractéristiques et avantages analogues au procédé qu'ils mettent en œuvre.

D'autres particularités et avantages de l'invention apparaîtront encore dans la description ci-après en relation avec les dessins annexés, donnés à titre d'exemples non limitatifs :
- la **figure 1** illustre schématiquement les étapes du procédé selon un mode de réalisation l'invention, et
- la **figure 2** illustre schématiquement un exemple de système client-serveur adapté à mettre en œuvre le procédé selon l'invention.

### Définitions

Par la suite, on désignera par base de données relationnelle, toute structure de données composée d'un nombre fini de relations ou tables. Chaque table ou relation est une structure de base, regroupant des données sur un sujet précis, tel que le séjour des patients dans un hôpital.

Chaque table ou relation comprend un ensemble de N tuples non ordonnés {tᵤ} avec N et u désignant un entier naturel, où 1 ≤ u ≤ N. Chaque tuple tᵤ comprend une pluralité de M attributs désignés {A₁, A₂,...,Aᵢ, ..., A_{M}} où M désigne un entier naturel. Chaque attribut Aᵢ, pour 1 ≤ i ≤ M, prend des valeurs comprises dans un domaine de valeurs prédéfini. La valeur du n^{ième} attribut du u^{ième} tuple est désignée par tᵤ.Aₙ. Chaque tuple est identifié de manière unique par une clé primaire tᵤ.PK qui désigne un attribut, un ensemble d'attributs ou le résultat d'une fonction appliquée à un ensemble d'attributs. On désignera par données, tout type d'information numérique pouvant être contenu dans une base de données, en particulier de type relationnelle.

A titre d'exemple illustratif et non limitatif, on considérera ci-après une seule table désignée par *Table* comprenant des informations relatives aux séjours de patients dans un hôpital, dans laquelle un utilisateur autorisé à modifier la table y insère de nouveaux tuples. Les attributs de cette table comprennent notamment l'identifiant du séjour « *id_sejour »,* l'âge « *Age* », et la durée de séjour « *Duree sejour* » des patients ayant séjournés à l'hôpital. Ainsi, un enregistrement de cette table est constitué par un tuple comprenant l'ensemble des valeurs des attributs *id_sejour, Age, Duree_sejour* relatives à un séjour donné, comme représenté schématiquement dans le **Tableau** 1 ci-dessous qui comprend N tuples, où chaque tuple correspond à une ligne du tableau.

Dans cet exemple, l'attribut *Age* prend une valeur numérique comprise dans l'intervalle [0-110]. La clé primaire est constituée par l'attribut *id_sejour* qui permet d'extraire de manière unique les informations relatives à un séjour particulier parmi l'ensemble des séjours enregistrés dans la table.

**Tableau 1. Exemple d'une table : Table**

| *id_sejour* | *Age* | *Duree_sejour* |
|---|---|---|
| Id1 | 13 | 6 |
| Id2 | 59 | 0 |
| Id3 | 67 | 22 |

Par définition, on désignera par tatouage réversible toute technique de marquage numérique des données ayant la capacité de supprimer desdites données une marque préalablement insérée pour tatouer les données, de manière à récupérer les données originales, c'est-à-dire les données avant application du tatouage.

Pour les exemples décrits par la suite, on se place dans le cas particulier d'un mécanisme de tatouage réversible.

Lors d'une opération de tatouage, l'insertion de la marque consiste à modifier les valeurs de certains attributs Aₙ de la base de données selon une force de marquage ±α dite force d'insertion caractérisant la modification effectuée sur la valeur des attributs sur lequel porte le tatouage (i.e. attributs à tatouer). Par la suite, les termes "force d'insertion" et "force de marquage" seront utilisés indifféremment pour désigner la même grandeur. La force de marquage α peut être différente pour chaque attribut tatoué.

Dans le présent exemple, on suppose que l'âge du patient est un attribut tatoué avec une force de marquage α égale à ±3. Pour le tuple identifié par Id1 dans la base de données tatouée, la valeur de l'âge du patient est égale à 13.

Des métadonnées de tatouage M sont associées au mécanisme de tatouage considéré. Ces métadonnées comprennent des informations définissant le mécanisme de tatouage réversible mis en œuvre, permettant notamment d'adapter le marquage de manière automatique et de tatouer les nouveaux enregistrements lors de mises à jour de la base de données (e.g. insertion ou suppression de tuples), qui peuvent être effectuées par l'administrateur ou des utilisateurs autorisés.

En particulier, ces métadonnées comprennent les paramètres du processus d'insertion de la marque dans les données à tatouer, telles que la force d'insertion utilisée pour modifier la valeur des attributs tatoués lors de l'insertion de la marque, les valeurs maximales et minimales des attributs tatoués, les valeurs de séquences insérées dans les données.

Les métadonnées comprennent également des données indépendantes de la méthode de tatouage considérée. Elles indiquent, par exemple, les attributs tatoués, le ou les attributs qui composent la clé primaire de la relation, les identifiants tatoués, le mode de calcul de signatures numériques, etc.

### 4. Description détaillée d'un mode de réalisation

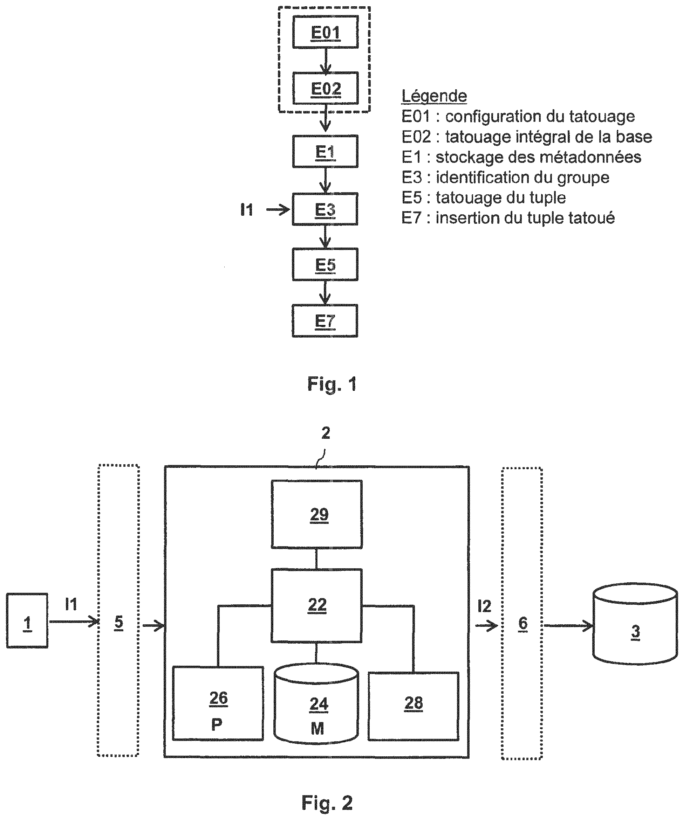

Un mode de réalisation de l'invention va être décrit conjointement en référence aux **figures 1 et 2** qui illustrent respectivement les étapes du procédé d'insertion de données à la volée et un système destiné à mettre en œuvre ledit procédé selon l'invention.

### Dispositif

Sur le plan matériel, l'invention est mise en œuvre au niveau d'un système dit « client-serveur » comprenant un client 1, un serveur 2 adapté à communiquer avec le client et une base de données tatouées 3 comme illustré sur la **figure 2**. Plus précisément, les étapes du procédé d'insertion selon l'invention sont mises en œuvre par le serveur 2. La base de données tatouées 3 peut être distante du serveur 2, notamment pour des raisons de sécurité.

Par exemple, le client 1 est mis en œuvre sur un terminal mobile d'un utilisateur, tel qu'un ordinateur, un téléphone portable, une tablette, ou tout autre type de dispositif adapté à communiquer avec le serveur 2 via un réseau de télécommunications (non représenté).

Le serveur 2 est mis en œuvre dans tout type d'ordinateur adapté à fournir à un gestionnaire de bases de données 6 les instructions nécessaires insérer ou supprimer des données de la base de données 3, en réponse à des premières requêtes d'insertion de données I1 émises par le client 1 via une interface réseau 5 en vue d'insérer de nouvelles données de la base de données tatouées 3.

Le serveur 2 comprend une unité de traitement 22 composée d'au moins un processeur possédant un ou plusieurs cœurs de calcul. Cette unité est en charge de l'exécution de programmes informatiques s'exécutant sur le serveur 2 et en particulier un programme informatique P comprenant les instructions nécessaires pour la mise en œuvre du procédé d'insertion selon l'invention.

L'unité de traitement 22 est connectée à un ensemble de périphériques aux travers de bus de communication. Les périphériques comprennent au moins un module de mémoire vive 28 constituant une mémoire volatile de travail destinée à stocker les programmes en cours d'exécution et les données sur lesquelles travaillent ces programmes telle que des requêtes d'insertion ou des données extraites.

L'unité de traitement 22 est également connectée à un module d'entrée/sortie réseau 29 qui connecte le serveur 2 à un réseau de communication pour communiquer avec le gestionnaire de base de données 6.

D'autres périphériques tels qu'un disque SSD (*Solid State Drive* en anglais) ou disque mémoire flash peuvent être connectés à ce même bus au sein du serveur 2. Le bus peut être dans les machines actuelles le bus PCIe (PCI Express). L'unité de traitement 22 est également connectée via un second bus de communication à d'autres périphériques tels que des unités de stockage permanent comme des disques durs, d'autres périphériques d'entrée/sortie comme une interface USB, etc. En particulier, l'unité de traitement 22 est connectée à un disque dur protégé 24 destiné à stocker des données sensibles telles que les métadonnées de tatouage.

Dans le présent mode de réalisation, le serveur 2 est un serveur de confiance physiquement distinct du gestionnaire de base de données 6. Étant donné que le serveur 2 renferme des informations très sensibles telles que les métadonnées de tatouage, l'accès à ces données est protégé par des données d'authentification et/ou d'identification distinctes de celles utilisées pour accéder à la base de données tatouées 3. En particulier, les droits de lecture et d'écriture associés aux métadonnées de tatouage ne sont pas accordés à un utilisateur de la base de données mais uniquement à des personnes de confiance autorisées. Toute autre méthode visant à protéger les métadonnées de tatouage de menaces intérieures ou extérieures pourront également être considérées.

On suppose que la base de données 3 comprend des données qui ont été préalablement tatouées, lors de leur insertion dans la base de données, selon un mécanisme de tatouage réversible défini par des métadonnées de tatouage M. Dans le présent exemple, ces métadonnées sont stockées dans le disque dur 24 du serveur 2.

### Procédé

Lors d'une étape de tatouage intégral E02, l'ensemble des tables ou relations présentes dans la base de données 3 sont tatouées selon un mécanisme de tatouage réversible connu.

A titre d'exemple illustratif, on considère le mécanisme de tatouage réversible, basé sur une technique de modulation par histogramme circulaire, tel que décrite dans l'article de Javier Franco-Contreras, Gouenou Coatrieux, Frédéric Cuppens, Nora Cuppens-Boulahia et Christian Roux, intitulé « Robust Lossless Watermarking of Relational Databases based on Circular Histogram Modulation », publié dans IEEE Transactions on Information Forensics and Security, Vol. 9, no. 3, Mars 2014. Ce document est référencé D2.

Pour simplifier, on considère le cas où la base de données 3 comprend une seule table *Table.* Pour tatouer les données contenue dans cette table, le propriétaire de la base définit, lors d'une étape de configuration préalable E01, un ensemble de paramètres de tatouage, parmi lesquels figurent des informations relatives à la répartition de tuples dans des groupes disjoints, des informations relatives à la modulation de tatouage utilisé pour modifier la valeur de certains attributs de tuples et un message à dissimuler (i.e. marque) par application de la modulation. Tous ces paramètres sont stockés en tant que métadonnées de tatouage M. En particulier, les métadonnées de tatouage comprennent une clé de tatouage secrète K_{W}, la désignation des attributs de tatouage, c'est-à-dire des attributs sur lesquels porte le tatouage.

De manière connue, le tatouage consiste à encoder un message en insérant une séquence S de symboles ou de bits définissant le message à dissimuler. Cet encodage consiste à modifier la valeur de certains attributs des tuples en fonction de leur groupe d'appartenance selon une règle de codage prédéfinie. Le ou les attributs sur lesquels porte le tatouage sont identifiés dans les métadonnées de tatouage M.

L'étape de tatouage intégral E02 comprend une première sous-étape de création de groupes de tuples et une deuxième sous-étape de modulation telles que décrites ci-dessous.

### Création des groupes

De manière générale, les tuples de la table à protéger par tatouage sont répartis, de manière uniforme, en un ensemble de N_{g} groupes disjoints {Gᵢ} où 1≤i≤N_{g} où Ng désigne le nombre total de groupes de tuples de la base de données, ce nombre étant déterminé lors de l'étape de configuration E01. Par exemple, le numéro du groupe nᵤ auquel appartient un tuple tᵤ est déterminé en fonction de la clé secrète de tatouage K_{w} et de la clé primaire tᵤ.PK du tuple, en appliquant une fonction de hachage cryptographique H de type SHA (*Secure Hash Algorithm*) selon la formule suivante :
nᵤ=H(K_{W}|H(K_{W}|t.PK))mod(N_{g}), où | désigne l'opérateur concaténation et *mod* désigne la fonction mathématique *modulo.*

### Modulation

Dès lors que les groupes de tuples ont été formés, au moins un bit ou symbole d'une séquence S (message ou marque à dissimuler dans la base de données) est inséré dans certains groupes dit « porteurs ».

Cette séquence S est préalablement déterminée en fonction de la propriété de sécurité que l'on souhaite assurer (e.g. signature de la base de données pour la assurer la protection de l'intégrité des données, identifiant associé à une date pour assurer la traçabilité, *etc*.). Par exemple, la séquence S est une séquence de bits {Sᵢ} où Sᵢ est un bit sélectionné de manière pseudo-aléatoire parmi l'ensemble {0, 1}, i désignant un entier naturel tel que 1≤i≤Nₛ. Dans le cas particulier où Nₛ=N_{g}, tous les groupes sont porteurs. En temps normal, on a la relation suivante : N_{g} > Nₛ.

Cette séquence S peut être stockée dans les métadonnées de tatouage M. De manière plus générale, une information indiquant la valeur dudit au moins un symbole ou bit Sᵢ à insérer dans chaque groupe porteur Gᵢ est enregistrée en association avec un identifiant du groupe considéré. Par exemple, on enregistre dans les métadonnées de tatouage M, le bit « 1 » en association avec l'identifiant du groupe porteur G₁ pour indiquer que le bit « 1 » est encodé au sein du groupe G₁. Selon un autre exemple, on enregistre le signe + pour désigner le bit « 1 » (respectivement le signe - pour désigner le bit « 0 ») en association avec l'identifiant du groupe porteur G.

Dans le cas de la modulation par histogramme circulaire considéré, pour chaque groupe Gᵢ, chacun des tuples tᵤ est également réparti dans un sous-groupe sélectionné parmi un ensemble de deux sous-groupes notés G_{A,i} et G_{B,i}. Ce sous-groupe est secrètement déterminé en utilisant la clé secrète de tatouage K_{W} enregistrée dans les données de tatouage, selon la formule suivante : nᵤ=H(K_{W}|H(K_{W}|tᵤ.PK))mod(2). Par exemple, le tuple tᵤ est associé au groupe G_{A,i} si H(K_{W}|tᵤ.PK))mod(2)=0 ou au groupe G_{B,i} si H(K_{W}|tᵤ.PK))mod(2)=1.

On suppose que Aₙ désigne un attribut de type numérique, sur lequel porte le tatouage, i.e. dont la valeur est modifié selon la règle prédéfinie en fonction du type de groupe auquel appartient le tuple.

Comme décrit dans le document D2, pour chaque groupe Gᵢ, la distribution des valeurs de l'attribut Aₙ est calculée et représentée sous forme d'histogrammes projetés sur un même cercle, pour chacun des deux sous-groupes G_{A,i} et G_{B,i}. Le premier sous-groupe G_{A,i} (respectivement deuxième sous-groupe G_{B,i}) est caractérisé par son centre de masse C_{A,i} (respectivement C_{B,i}) auquel est associé le vecteur V_{A,i} (respectivement V_{B,i}) comme illustré sur la figure 2 dans le document D2.

### Groupes porteurs

Dans le cas où le groupe Gi est porteur d'au moins un bit ou symbole à insérer dans le groupe (encodage), le processus d'insertion consiste à moduler l'angle βᵢ formé par les deux vecteurs V_{A,i} et V_{B,i} pour insérer (ou encoder) le bit Sᵢ =0 ou Sᵢ =1, selon la règle de codage exprimée en fonction de la force d'insertion α comme suit :
βᵢ^{W}= βᵢ-2α pour insérer le bit Sᵢ =0 ou
βᵢ^{W}= βᵢ+2α pour insérer le bit Sᵢ =1.
De manière équivalente, la modulation de l'angle βᵢ par ±2α correspond à une modification de valeur de l'attribut Aₙ de ±Δ, tel que Δ = α.L/(2π) où L désigne le nombre de valeurs distinctes que peut prendre l'attribut Aₙ sur l'histogramme. Le signe est défini en fonction du sous-groupe auquel appartient le tuple comme résumé dans le **tableau 2** ci-dessous :

**Tableau 2. Règle de codage pour un groupe porteur**

| Sᵢ | Gᵢ | G_{A,i} | G_{B,i} |
|---|---|---|---|
| | βᵢ^{W}= βᵢ-2α.(2Si-1) | Aₙ+2(Sᵢ-1)Δ | Aₙ+(1-2Sᵢ)Δ |
| 0 | βᵢ^{W}= βᵢ-2α (βᵢ^{W}<0) | Aₙ-Δ | Aₙ+Δ |
| 1 | βᵢ^{W}= βᵢ+2α (βᵢ^{W}>0) | Aₙ+Δ | Aₙ-Δ |

Cette règle de codage s'applique aux groupes porteurs vérifiant la relation |βᵢ|<2α. Le signe de l'angle modulé βᵢ^{W} par la règle de codage indique la valeur du bit encodé. Ainsi, βᵢ^{W}<0 dans le cas où Sᵢ=0, tandis que βᵢ^{W}>0 dans le cas où Sᵢ=1.

Selon une particularité de l'invention, on stocke lors d'une étape de stockage E1 dans les métadonnées de tatouage M, pour chaque groupe porteur, une information indiquant la valeur dudit au moins un bit ou symbole Sᵢ à insérer, cette information étant stockée en association avec l'identifiant du groupe ou de la classe de type porteur. Ainsi, dans l'exemple présent, on stocke pour chaque groupe porteur Gᵢ, le signe de l'angle modulé βᵢ^{W} . La règle de codage est également stockée dans les métadonnées de tatouage lors de l'étape de stockage E1.

En stockant préalablement lors de l'étape de stockage E1 dans les métadonnées de tatouage M, les identifiants des groupes porteurs et le signe associé à chaque groupe pour encoder un bit, il est possible de tatouer à la volée un nouveau tuple destiné à être inséré dans la base de données.

### Groupes non porteurs

Dans le cas où |βᵢ| >2α, le groupe Gᵢ est un groupe non porteur dans le sens où la valeur de α est trop faible pour faire changer de signe βᵢ^{W} de manière à encoder un ou plusieurs bits ou symboles Sᵢ. En fonction du signe de l'angle βᵢ, on distingue les groupes non porteurs positifs pour lesquels βᵢ>0 et les groupes non porteurs négatifs pour lesquels βᵢ<0. En fonction de l'appartenance du tuple à l'un des deux sous-groupes G_{A,i} ou G_{B,i}, la valeur de l'angle βᵢ est modifiée en fonction du caractère positif ou négatif du groupe non porteur et en fonction de la force d'insertion α, selon la règle de modification suivante (c.f. Tableau 3) :

**Tableau 3. Règle de modification pour un groupe non porteur**

| Signe de βᵢ | Modification de βᵢ | Modification de Aₙ si tuple dans G_{A,i} | Modification de Aₙ si tuple dans G_{B,i} |
|---|---|---|---|
| βᵢ>0 | βᵢ^{W}= βᵢ+2α | Aₙ+Δ | Aₙ-Δ |
| βᵢ<0 | βᵢ^{W}= βᵢ-2α | Aₙ-Δ | Aₙ+Δ |

Selon une particularité de l'invention, on stocke lors de l'étape de stockage E1 dans les métadonnées de tatouage M, pour chaque groupe non-porteur, le signe de l'angle βᵢ indiquant si le groupe est non porteur positif ou négatif, cette information étant stockée en association avec l'identifiant du groupe de type non porteur. Ainsi, dans l'exemple présent, on stocke pour chaque groupe non porteur Gᵢ, le signe de l'angle βᵢ. La règle de modification est également stockée dans les métadonnées de tatouage lors de l'étape de stockage E1.

En stockant lors de l'étape de stockage E1 dans les métadonnées de tatouage M, les identifiants des groupes non porteurs et le signe associé à chaque groupe pour encoder un bit, il est possible de modifier la valeur de l'attribut Aₙ d'un nouveau tuple destiné à être inséré à la volée dans la base de données.

### Groupe overflow

Dans le cas où |βᵢ| > π-2α, le groupe est de type overflow. Pour ce type de groupe, aucune modification n'est appliquée à l'attribut Aₙ des tuples appartenant à ce type de goupe. Seul un « overhead » est ajouté pour distinguer le groupe de type overflow des autres types de groupes.

L'enregistrement préalable (étape E1) dans les métadonnées de tatouage, du type de groupe (i.e. porteur, non porteur positif/négatif) et d'une règle de modification ou de codage associée à ce type de groupe pour modifier la valeur de l'attribut à tatouer, permet avantageusement d'insérer tout nouveau tuple à la volée, sans avoir à effectuer un traitement sur l'intégralité de la base de données.

Dans le présent mode de réalisation, la règle prévue pour modifier la valeur de l'attribut Aₙ consiste à ajouter ou à soustraire Δ=α.L/(2π) aux valeurs que peut prendre l'attribut Aₙ dans un groupe (ou sous-groupe) en fonction de l'appartenant du tuple à ce groupe (ou sous-groupe). Cette modification est conçue de telle sorte qu'elle permet de préserver le type de groupe auquel est associé un tuple lors de son insertion dans la base. Cette règle de modification est donnée à titre d'exemple illustratif. Bien évidemment, l'homme du métier pourra envisager d'autres règles ayant la propriété.

On suppose que la base de données est tatouée intégralement lors d'une étape préalable de tatouage intégral E02 selon les métadonnées de tatouage (M). A l'issue de cette étape, les tuples sont répartis de manière uniforme dans un ensemble de groupes, parmi lesquels certains sont porteurs d'un bit du message dissimulé.

On suppose qu'un utilisateur ayant les droits d'écriture sur la base de données 3 émet, au moyen de son terminal client, une première requête d'insertion I₁ pour insérer un nouveau tuple tᵤ dans ladite base. Par exemple, ce tuple est constitué par les trois attributs suivant : *id_sejour* =Id4 ; *Age*=12 ; *duree_sejour*=4 que l'on désignera {4 ; 12 ; 4} par la suite.

Sur réception de cette première requête d'insertion I₁, le serveur 2 détermine en consultant les métadonnées de tatouage M si le tuple comprend au moins un attribut sur lequel doit porter le tatouage.

Dans le présent exemple, le serveur 2 identifie que les attributs *age* et *duree_sejour* sont des attributs tatoués respectivement avec une force d'insertion ±3 et ±2 et que trois groupes sont formés : un premier groupe porteur encodant un bit '1' (groupe 1), un deuxième groupe porteur encodant un bit '0' (groupe 2) et un troisième groupe porteur encodant un bit '1' (groupe 3).

Lors d'une étape d'identification E3, le serveur 2 identifie le groupe dans lequel le tuple est destiné à être inséré parmi l'ensemble des groupes identifiés dans les métadonnées de tatouage. L'identifiant du groupe dans lequel le nouveau tuple doit être inséré déterminé à partir de la clé primaire du tuple tᵤ et de la clé de tatouage, au moyen d'une fonction cryptographique de hachage comme décrit précédemment. D'après cet identifiant, le serveur détermine le type de groupe et la règle correspondante pour modifier la valeur de l'attribut à tatouer Aₙ.

Dans le présent exemple, le serveur identifie lors de l'étape d'identification E3 que le groupe 1 est un groupe porteur encodant un bit '1', le groupe 2 est un groupe porteur encodant un bit '0' et le groupe 3 est un groupe porteur encodant un bit '1'). Le tuple à insérer {4 ; 12 ; 4} appartient au deuxième groupe Gᵢ₌₂ et au sous-groupe A de ce deuxième groupe (G_{A,i}) où i=2.

Lors d'une étape de tatouage **E5,** le serveur 2 détermine en fonction du type de groupe identifié la règle à appliquer pour le tuple à insérer, en consultant les métadonnées de tatouage M. Plusieurs cas de figures se présentent en fonction du type de groupes.

Si le groupe identifié est un **groupe porteur** (|βi|<2α), la distribution des valeurs de l'attribut Aₙ est modifiée de ±Δ en fonction de l'appartenance du tuple à l'un des deux sous-groupes G_{A,i}, G_{B,i} et du symbole Sᵢ codé dans le groupe selon la règle de codage définie dans les métadonnées de tatouage.

Si le bit à encoder dans le groupe Gᵢ est Sᵢ=0, la distribution des valeurs de l'attribut Aₙ dans le sous-groupe G_{A,i} est modifiée de -Δ tandis que la distribution des valeurs de l'attribut Aₙ dans le sous-groupe G_{B,i} est modifiée de + Δ. Cette modification correspond à une modulation de l'angle βᵢ de -2α entre les deux histogrammes distribués sur le cercle, de sorte que la valeur de l'angle tatoué (i.e. modifié par le tatouage) est βᵢ^{W}= βᵢ-2α.

Au contraire, si le bit à encoder dans le groupe Gᵢ est Sᵢ=1, la distribution des valeurs de l'attribut Aₙ dans le sous-groupe G_{A,i} est modifiée de +Δ tandis que la distribution des valeurs de l'attribut Aₙ dans le sous-groupe G_{B,i} est modifiée de - Δ. Cette modification correspond à une modulation de l'angle βᵢ de +2α entre les deux histogrammes distribués sur le cercle, de sorte que la valeur de l'angle tatoué (i.e. modifié par le tatouage) est βᵢ^{W}= βᵢ+2α.

Ayant préalablement identifié les groupes porteurs, on peut directement modifier la valeur de l'attribut Aₙ sur lequel porte le tatouage pour l'encodage du bit associé au groupe, dans la mesure où l'application systématique de la règle de codage associée à ce type de groupe préserve la nature du groupe.

Si le groupe identifié est un groupe **non porteur** (|βᵢ|>2α), le serveur 2 identifie en fonction du signe de l'angle βᵢ, si le groupe est non porteur positif (βᵢ>0) ou si le groupe est non porteur négatif (βᵢ>0). La distribution des valeurs de l'attribut Aₙ est modifiée de ±Δ en fonction du caractère positif/négatif du groupe, selon la règle définie dans les métadonnées de tatouage.

Dans le cas d'un groupe non-porteur positif (βᵢ>0), la distribution des valeurs de l'attribut Aₙ dans le sous-groupe G_{A,i} est modifiée de +Δ et la distribution des valeurs de l'attribut Aₙ dans le sous-groupe G_{B,i} est modifiée de -Δ, comme indiqué dans le tableau 3. Cette modification correspond à une modulation de l'angle βᵢ de +2α, de sorte que la valeur de l'angle tatoué (i.e. modifié par le tatouage) est βᵢ^{W}= βᵢ+2α.

Au contraire, le cas d'un groupe non-porteur négatif (βᵢ<0), la distribution des valeurs de l'attribut Aₙ dans le sous-groupe G_{A,i} est modifiée de -Δ et la distribution des valeurs de l'attribut Aₙ dans le sous-groupe G_{B,i} est modifiée de +Δ, comme indiqué dans le tableau 3. Cette modification correspond à une modulation de l'angle βᵢ de -2α, de sorte que la valeur de l'angle tatoué (i.e. modifié par le tatouage) est βᵢ^{W}= βᵢ-2α.

Ayant préalablement identifié les groupes non porteurs, on peut directement modifier la valeur de l'attribut Aₙ sur lequel porte le tatouage dans la mesure où l'application systématique de la règle de modification associée à ce type de groupe préserve la nature du groupe.

Dans tous les cas, le stockage préalable du type de groupe et d'une règle associée à ce type de groupe pour modifier la valeur de l'attribut Aₙ désigné en tant qu'attribut tatoué lors de l'étape de stockage E1, rend possible l'insertion du tuple tᵤ à la volée sans avoir à opérer un traitement sur l'intégralité de la base de données tatouée. Autrement dit, en connaissant préalablement comment modifier la valeur des attributs sur lequel porte le tatouage pour chaque nouveau tuple à insérer, on peut traiter un à un les nouveaux tuples, sans avoir à détatouer l'intégralité de la base de données. Ceci est particulièrement avantageux pour réduire le temps nécessaire pour la mise à jour des bases de données tatouées très volumineuses.

Dans le présent exemple, lors de l'étape de tatouage **E5,** le serveur 2 identifie que le groupe Gᵢ=2 dans lequel est destiné à être inséré le nouveau tuple {4 ; 12 ; 4} est un groupe porteur, pour lequel la règle de codage est mise en œuvre pour chacun des deux attributs tatoués *age* et *duree_sejour,* comme décrit ci-dessous.

Pour l'attribut tatoué *age,* la valeur originale 12 est modifiée de -3 étant donné que la force d'insertion pour l'attribut *age* est égale à 3, le groupe d'appartenance du tuple considéré est un groupe porteur encodant un bit '0' (i.e. groupe 2) et que le tuple appartient au sous-groupe A (i.e. G_{A,2}). Par conséquent, la valeur finale de l'âge enregistrée dans la base est 9 (i.e. correspondant à la valeur Aₙ-Δ dans le tableau 2 à la ligne Sᵢ=0 et à la colonne G_{A,i}, avec Aₙ=12 et Δ=3).

Pour l'attribut tatoué *duree_sejour,* la valeur originale 4 est modifiée de -2 étant donné que la force d'insertion pour l'attribut *duree_sejour* est égale à 2. Le groupe d'appartenance du tuple considéré est un porteur encodant un bit '0' (i.e. groupe 2). Le tuple appartient au sous-groupe A. Par conséquent, la valeur finale de l'âge enregistrée dans la base est 2 (i.e. correspondant à la valeur Aₙ-Δ dans le tableau 2 à la ligne Sᵢ=0 et à la colonne G_{A,i}, avec Aₙ=4 et Δ=2).

Lors de l'étape de tatouage E5, le serveur 2 modifie la valeur des attributs selon les règles ci-dessus de manière à obtenir le tuple tatoué {4 ; 9 ; 2}.

Ensuite, le serveur 2 génère et envoie au gestionnaire de base de données 6 lors d'une étape d'envoi E7, une deuxième requête d'insertion I2 comprenant ledit tuple tatoué (e.g. {4 ; 9 ; 2}). Sur réception de la deuxième requête I2, le gestionnaire de base de données 6 insère le tuple tatoué dans la base de données tatouées. Dans le présent exemple, il s'en suit que la valeur des attributs *age* et *duree_sejour* est modifiée comme indiqué dans la table mise à jour ci-dessous (c.f. Tableau 4):

**Tableau 4.**

| *Id_sejour* | *Age* | *Duree_sejour* |
|---|---|---|
| 1 | 13 | 6 |
| 2 | 59 | 0 |
| 3 | 67 | 22 |
| **4** | **9** | **2** |

Ainsi, l'application de la règle de modification ou de codage permet l'insertion d'un nouveau tuple sans perturber le tatouage déjà existant, c'est-à-dire sans provoquer de distorsion de la marque dans la base de données tatouée.

Naturellement, pour satisfaire des besoins spécifiques, une personne compétente dans le domaine de l'invention pourra appliquer des modifications dans la description précédente.

Bien que la présente invention ait été décrite ci-dessus en référence à un mode de réalisation spécifique, la présente invention n'est pas limitée à ce seul mode de réalisation spécifique mais l'invention est définie par les revendications indépendantes annexées, des exemples d'implémentation étant donnés par les revendications dépendantes.

## Revendications

1. Procédé d'insertion d'au moins un tuple (tᵤ) dans une base de données (3) préalablement tatouée selon un mécanisme réversible de tatouage d'une séquence (S) de bits ou symboles de modulation par histogramme circulaire, selon lequel les tuples contenus dans ladite base de données sont répartis dans un ensemble de groupes (Gᵢ) de tuples, et selon lequel les bits ou symboles de la séquence (S) sont respectivement insérés dans au moins certains groupes dits de type « porteurs », les autres groupes étant dits de type « non porteur », ledit procédé comprenant les étapes suivantes :
• stockage (E1) de métadonnées (M) du tatouage réversible de modulation par histogramme circulaire, ces métadonnées (M) comprenant :
- au moins un attribut (Aₙ) sur lequel porte ledit tatouage ;
- la séquence (S) ;
- pour chaque groupe, le type de groupe sélectionné parmi « porteur » ou « non porteur » ;
- pour chaque groupe « porteur », le symbole ou le bit à encoder dans ledit groupe ;
- pour chaque type de groupe, une règle (R) définissant, indépendamment des tuples de la base de données, une modification de la valeur dudit au moins un attribut (Aₙ) en fonction d'un paramètre de force d'insertion α prédéfini et, pour chaque groupe « porteur », du bit ou symbole à insérer ;
- une clé secrète de tatouage ;
• sur réception d'une première requête d'insertion (I₁) comprenant ledit au moins un tuple (tᵤ), identification (E3) du groupe (Gᵤ) dans lequel ledit au moins un tuple (tᵤ) est destiné à être inséré, parmi ledit ensemble de groupes, à partir uniquement des métadonnées et du tuple (tᵤ), le groupe étant identifié à partir d'une clé primaire du tuple (tᵤ) et de la clé secrète de tatouage ;
• tatouage (E5) dudit au moins un tuple (tᵤ) en modifiant, uniquement à partir des métadonnées (M) et du au moins un tuple (tᵤ), l'au moins un attribut (Aₙ) de l'au moins un tuple (tᵤ) d'une valeur déterminée selon ladite règle associée au type de groupe identifié, de manière à obtenir au moins un tuple modifié (tᵤ') ; et
• envoi (E7) d'une deuxième requête d'insertion (I2) comprenant ledit au moins un tuple modifié (tᵤ') à un gestionnaire de la base de données (6), de sorte que le gestionnaire insère le tuple tatoué (tᵤ') dans la base de données préalablement tatouée ;
ladite règle étant définie de manière à préserver le type du groupe suite à l'insertion dudit au moins un tuple modifié (tᵤ') dans la base de données tatouée (3).

2. Procédé selon la revendication précédente, **caractérisé en ce que** l'accès aux métadonnées de tatouage (M) et l'accès à la base de données (3) sont respectivement protégés par des données d'authentification et/ou d'identification distinctes.

3. Procédé selon la revendication précédente, **caractérisé en ce que** les droits de lecture et d'écriture associés aux métadonnées de tatouage (M) ne sont pas accordés à un utilisateur de la base de données (3).

4. Programme d'ordinateur (P) comprenant les instructions adaptées à la mise en œuvre des étapes du procédé selon l'une quelconque des revendications précédentes, lorsque ledit programme est exécuté sur un ordinateur.

5. Moyen de stockage d'informations (24), amovible ou non, partiellement ou totalement lisible par un ordinateur ou un microprocesseur comportant les instructions de code d'un programme d'ordinateur pour l'exécution des étapes du procédé selon l'une quelconque des revendications 1 à 3.

6. Serveur (2) adapté pour exécuter les instructions adaptées pour la mise en œuvre des étapes du procédé selon l'une quelconque des revendications 1 à 3.

## Patentansprüche

1. Verfahren zum Einfügen mindestens eines Tupels (tᵤ) in eine Datenbank (3), die vorab mit einem reversiblen Wasserzeichen einer Folge (S) von Bits oder Modulationssymbolen nach dem Prinzip eines zirkulären Histogramms markiert wurde, wobei die in der Datenbank enthaltenen Tupel in einer Anordnung von Gruppen (Gᵢ) von Tupeln verteilt werden, und wobei die Bits oder Symbole der Folge (S) jeweils in mindestens einige Gruppen des Typs "Träger" eingefügt werden, wobei die anderen Gruppen als Typ "Nicht-Träger" bezeichnet werden, wobei das Verfahren die folgenden Schritte umfasst:
• Speichern (E1) von Metadaten (M) des reversiblen Wasserzeichens mit zirkulärem Histogramm, wobei diese Metadaten (M) umfassen:
- mindestens ein Attribut (Aₙ), auf dem das Wasserzeichen angebracht ist;
- die Folge (S);
- für jede Gruppe den Typ der Gruppe, ausgewählt aus "Träger" oder "Nicht-Träger";
- für jede Gruppe des Typs "Träger" das Symbol oder das Bit, das in der Gruppe zu kodieren ist;
- für jeden Typ von Gruppe eine Regel (R), die unabhängig von den Tupeln der Datenbank eine Änderung des Werts des mindestens einen Attributs (Aₙ) in Abhängigkeit von einem vordefinierten Parameter für die Einfügestärke α und, für jede Gruppe des Typs "Träger", in Abhängigkeit von dem einzufügenden Bit oder Symbol definiert.
- einen geheimen Wasserzeichen-Schlüssel;
• bei Empfang einer ersten Einfügeanfrage (11) die das mindestens eine Tupel (tᵤ) umfasst, Identifizieren (E3) der Gruppe (Gᵤ) in die das mindestens eine Tupel (tᵤ) eingefügt werden soll, aus der Anordnung von Gruppen, ausschließlich auf der Grundlage der Metadaten und des Tupels (tᵤ), wobei die Gruppe anhand eines Primärschlüssels des Tupels (tᵤ) und des geheimen Wasserzeichen-Schlüssels identifiziert wird;
• Markieren (E5) des mindestens einen Tupels (tᵤ) durch Modifizieren, nur ausgehend von den Metadaten (M) und dem mindestens einen Tupel (tᵤ), des mindestens einen Attributes (Aₙ) des mindestens einen Tupels (tᵤ) um einen Wert, der gemäß der genannten Regel in Verbindung mit dem identifizierten Gruppentyp bestimmt wurde, so dass mindestens ein modifiziertes Tupel entsteht (tᵤ'); und
• Senden (E7) einer zweiten Einfügeanfrage (12) die das mindestens eine modifizierte Tupel (tᵤ') an eine Verwaltungseinrichtung der Datenbank (6), so dass die Verwaltungseinrichtung das markierte Tupel (tᵤ') in die zuvor markierte Datenbank einfügt.
wobei die Regel derart definiert ist, dass der Typ der Gruppe nach dem Einfügen des mindestens einen modifizierten Tupels (tᵤ') in die markierte Datenbank (3) erhalten bleibt.

2. Verfahren nach einem vorstehenden Anspruch, **dadurch gekennzeichnet, dass** der Zugriff auf die Wasserzeichen-Metadaten (M) und der Zugriff auf die Datenbank (3) jeweils durch separate Authentifizierungs- und/oder Identifikationsdaten geschützt sind.

3. Verfahren nach einem vorstehenden Anspruch, **dadurch gekennzeichnet, dass** die Lese- und Schreibrechte, die den Wasserzeichen-Metadaten (M) zugeordnet sind, einem Benutzer der Datenbank (3) nicht erteilt werden.

4. Computerprogramm (P), das die Anweisungen umfasst, die zur Durchführung der Schritte des Verfahrens nach einem der vorstehenden Ansprüche geeignet sind, wenn das Programm auf einem Computer ausgeführt wird.

5. Informationsspeichermedium (24), beweglich oder nicht, teilweise oder vollständig lesbar durch einen Computer oder einen Mikroprozessor, das die Code-Anweisungen eines Computerprogramms zur Ausführung der Schritte des Verfahrens nach einem der Ansprüche 1 bis 3 umfasst.

6. Server (2), der dazu eingerichtet ist, die Anweisungen auszuführen, die zur Durchführung der Schritte des Verfahrens nach einem der Ansprüche 1 bis 3 geeignet sind.

## Claims

1. Method for inserting at least one tuple (tᵤ) into a database (3) watermarked beforehand according to a reversible watermarking mechanism of a sequence (S) of bits or symbols of modulation by circular histogram, wherein the tuples contained in said database are distributed in a set of groups (Gᵢ) of tuples, and wherein the bits or symbols of the sequence (S) are respectively inserted into at least certain groups known as "carrier" groups, the other groups being known as "non-carrier" groups, said method being **characterised in that** it comprises the following steps:
• storing (E1) of metadata (M) of the reversible watermarking modulation by circular histogram, said metadata (M) comprising:
- at least one attribute (Aₙ) on which said watermarking is carried;
- the sequence (S);
- for each group, the type of group selected from "carrier" or "non-carrier";
- for each "carrier" group, the symbol or bit to be encoded in said group;
- for each group type, a rule (R) defining, independently of the tuples in the database, a modification of the value of said at least one attribute (An) depending on a predefined insertion force parameter α and, for each "carrier" group, the bit or symbol to be inserted;
- a watermarking secret key;
• on receiving a first insertion request (I₁) comprising said at least one tuple (tᵤ), identifying (E3) the group (Gᵤ) into which said at least one tuple (tᵤ) is intended to be inserted, based solely on the metadata and the tuple (tu), wherein the group is identified using a primary key of the tuple (tu) and the watermarking secret key;
• watermarking (E5) said at least one tuple (tᵤ) by modifying, based solely on the metadata and the tuple (tu), said at least one attribute (Aₙ) of the at least one tuple (tu) by a value determined according to said rule associated with the identified group type, so as to obtain at least one modified tuple (tᵤ'); and
• sending (E7) a second insertion request (12) comprising said at least one modified tuple (tᵤ') to a database manager (6), so that the manager inserts the watermarked tuple (tᵤ') into the database (3) previously watermarked;
and **in that** said rule is defined so as to preserve the group type following the insertion of said at least one modified tuple (tu') into the watermarked database (3).

2. Method according to any one of the preceding claims, **characterised in that** the access to the watermarking metadata (M) and the access to the database (3) are respectively protected by distinct authentication data and/or identification data.

3. Method according to the preceding claim, **characterised in that** the read and write privileges associated with the watermarking metadata (M) are not granted to a user of the database (3).

4. Computer program (P) comprising instructions suitable for implementing the steps of the method according to any one of the preceding claims, when said program is executed on a computer.

5. Information storage means (24), removable or otherwise, partially or totally readable by a computer or a microprocessor, comprising the code instructions of a computer program for executing the method steps according to any one of claims 1 to 3.

6. Server (2) suitable for executing the instructions suitable for implementing the steps of the method according to any one of claims 1 to 3.
